# FASCICULE DE BREVET EUROPEEN

(11) **EP 3 711 109 B1**
(45) Date de publication et mention de la délivrance du brevet: **29.12.2021**
(21) Numéro de dépôt: 18807013.0
(22) Date de dépôt: 13.11.2018
(51) Int. Cl.: H01M 8/2475, B65D 88/14

(54) **SYSTEME DE GENERATION D'ENERGIE ELECTRIQUE NOMADE POUR UN AERONEF COMPRENANT UNE PILE A COMBUSTIBLE**
MOBILES SYSTEM ZUR ERZEUGUNG VON ELEKTRIZITÄT FÜR EIN FLUGZEUG MIT EINER BRENNSTOFFZELLE
MOBILE SYSTEM FOR GENERATING ELECTRICITY FOR AN AIRCRAFT COMPRISING A FUEL CELL

(30) Priorité: 14.11.2017 FR 1760680
(43) Date de publication de la demande: 23.09.2020
(73) Titulaire: Safran Power Units, 31200 Toulouse (FR)
(72) Inventeur: BARON, Matthieu, 77550 Moissy-Cramayel (FR); BOUDJEMAA, Fabien, 77550 Moissy-Cramayel (FR); HORDE, Théophile, 77550 Moissy-Cramayel (FR); JOLLYS, Jean-Baptiste, 77550 Moissy-Cramayel (FR); RAZES, Romain, 77550 Moissy-Cramayel (FR); VIVIER, Robert, 77550 Moissy-Cramayel (FR)
(74) Mandataire: Argyma
(86) Numéro de dépôt international: PCT/EP2018/081088
(87) Numéro de publication internationale: WO 2019/096792

(56) Documents cités:
- US-A1- 2009 184 126
- US-A1- 2010 193 629
- US-A1- 2012 166 037

## Description

### DOMAINE TECHNIQUE GENERAL ET ART ANTERIEUR

La présente invention concerne le domaine des piles à combustible, notamment dans le domaine aéronautique, et vise plus particulièrement un système de génération d'énergie électrique pour aéronef comprenant une pile à combustible.

De manière classique, les aéronefs permettent de déplacer des passagers d'une destination à une autre. Aujourd'hui, ils permettent également aux passagers de travailler durant le vol comme sur leur lieu de travail habituel. En effet, les aéronefs sont équipés de plans de travail, de dispositifs d'éclairage et de dispositifs d'alimentation électrique des équipements personnels des passagers durant toute la durée du vol, notamment leur ordinateur portable.

Durant le vol, les dispositifs d'éclairage et d'alimentation électrique sont alimentés en énergie électrique par des turbomoteurs permettant le déplacement de l'aéronef. Or, avant et après le vol, lorsque l'aéronef est au sol, les turbomoteurs sont éteints afin de limiter la consommation de carburant, le bruit ainsi que l'émission de gaz polluants. Aussi, lorsque l'aéronef est au sol, les différents dispositifs électriques de l'aéronef ne sont plus alimentés en énergie électrique par les turbomoteurs.

Pour permettre aux passagers de bénéficier d'électricité durant ces périodes pour travailler mais également pour se divertir, un aéronef peut comprendre un moteur auxiliaire, désigné APU pour «Auxiliary Power Unit» en langue anglaise désignant un groupe auxiliaire de puissance, adapté pour alimenter l'aéronef en énergie électrique lorsque les turbomoteurs sont éteints. Cependant, ce moteur est, comme les turbomoteurs, un moteur thermique qui consomme du carburant et génère du bruit, ce qui entraîne les inconvénients cités précédemment pour les turbomoteurs.

Une solution alternative consiste à relier l'aéronef au réseau électrique de l'aéroport afin de l'alimenter directement en énergie électrique. A cet effet, un aéroport peut proposer un service de raccordement de l'aéronef au réseau électrique de l'aéroport.

Cependant, ce service n'est pas disponible dans tous les aéroports, ce qui présente un inconvénient. En outre, ce service est onéreux pour les compagnies aériennes.

Il existe donc un besoin pour un système d'alimentation en énergie électrique d'un aéronef au sol qui soit indépendant de l'aéroport, qui présente peu de nuisances et dont le coût est réduit.

### PRESENTATION GENERALE DE L'INVENTION

A cet effet, l'invention concerne un système de génération d'énergie électrique nomade, notamment pour un aéronef, ledit système comprenant au moins une source de dioxygène, au moins une source de dihydrogène, au moins une pile à combustible, reliée à ladite source de dioxygène et à ladite source de dihydrogène, configurée pour générer de l'énergie électrique à partir du dioxygène et du dihydrogène.

Le système de génération est remarquable en ce qu'il comprend un conteneur aéronautique configuré pour être transporté dans un aéronef et dans lequel sont montées ladite source de dioxygène, ladite source de dihydrogène et ladite pile à combustible, le système de génération comportant au moins un module de liaison électrique relié électriquement à la pile à combustible, le module de liaison électrique comportant un port de connexion électrique de sortie configuré pour être connecté électriquement à un aéronef afin de l'alimenter en énergie électrique.

Grâce au système selon l'invention, il est possible d'alimenter un aéronef en énergie électrique lorsque les turbomoteurs sont éteints grâce à l'utilisation d'une pile à combustible. Une telle pile à combustible permet de produire de l'énergie sans consommer de carburant et sans émettre de gaz polluants ou de bruit. De plus, un tel système nomade est extérieur à l'aéronef et peut ainsi être utilisé hors de l'aéronef lorsque l'aéronef est au sol. De plus, il peut être transporté par ledit aéronef de manière pratique, sécurisée et faible.

De préférence, le conteneur comprend une partie inférieure dont la longueur est plus faible que sa partie supérieure afin que la forme du conteneur permette d'optimiser l'utilisation de l'espace intérieur de l'aéronef par le conteneur.

Avantageusement, le conteneur comprend au moins un pan coupé définissant au moins une paroi inférieure inclinée, le module de liaison électrique s'étendant dans une ouverture formée dans ladite paroi inférieure inclinée afin de protéger le module de liaison électrique des chocs et des intempéries.

De préférence, le conteneur aéronautique est du type LD1, LD2, LD3, LD6 ou LD8 tel que défini par l'ATA (Air Transport Association of America) afin d'être manipulé et stocké de manière similaire à un conteneur classique. De préférence encore, le conteneur est réalisé au moins en partie en aluminium afin de présenter une résistance suffisamment élevée pour résister au transport en aéronef tout en présentant une masse limitée.

De manière avantageuse, le module de liaison électrique comprend au moins un câble électrique dont une première extrémité est reliée électriquement à la pile à combustible et dont une deuxième extrémité est reliée au port de connexion électrique de sortie. Ainsi, le système peut être placé à distance de l'aéronef tout en étant relié à ce dernier par le câble électrique, ce qui permet une utilisation sécurisée de la pile à combustible. De préférence, le module de liaison électrique comprend un enrouleur dudit câble électrique afin de limiter l'encombrement du câble dans le conteneur tout en permettant un déroulement aisé lorsqu'un opérateur doit le brancher à l'aéronef.

De préférence encore, le module de liaison électrique est relié à un port de commande de la pile à combustible afin d'optimiser l'utilisation de dihydrogène selon les besoins en énergie électrique de l'aéronef et ainsi d'optimiser l'autonomie et les dimensions de la pile à combustible.

De manière préférée, le système comprend un module de récupération de l'eau générée par la pile à combustible, ledit module de récupération comprenant au moins un port de connexion hydraulique de sortie adapté pour être relié hydrauliquement à l'aéronef. Ainsi, l'eau générée par la pile à combustible peut être évacuée et est récupérée dans l'aéronef pour être utilisée.

Selon un aspect de l'invention, le système comprend un module de refroidissement de la pile à combustible, ledit module de refroidissement comprenant au moins une entrée d'air et une sortie d'air formées dans le conteneur aéronautique afin de permettre à de l'air extérieur de circuler à l'intérieur du conteneur aéronautique, ce qui permet d'évacuer hors du conteneur aéronautique la chaleur générée par la pile à combustible.

L'invention vise en outre un ensemble d'un aéronef comprenant un réseau électrique et d'au moins un système de génération tel que décrit précédemment, le port de connexion électrique de sortie du système étant relié au réseau électrique de l'aéronef afin d'alimenter l'aéronef en énergie électrique lorsque les turbomoteurs sont éteints.

L'invention concerne également un procédé d'alimentation d'un réseau électrique d'un aéronef au moyen d'un système de génération tel que décrit précédemment, le système étant inactivé et chargé dans un espace de stockage de l'aéronef, le procédé comprenant une étape de déchargement du système de génération en dehors de l'aéronef, une étape de connexion électrique du système de génération à l'aéronef et une étape d'activation du système de génération. Ainsi, la pile à combustible bascule entre un état désactivé lors de son stockage dans l'aéronef afin de transporter de manière sécurisée du dihydrogène, et un état activé dans lequel elle produit de l'énergie électrique pour alimenter l'aéronef lorsque ce dernier est stationné. De plus, la pile à combustible est démarrée lorsqu'elle est hors de l'aéronef afin d'optimiser la sécurité lors de son fonctionnement.

Avantageusement, le procédé comprend une étape de désactivation du système de génération avant le chargement du système de génération dans l'aéronef. Ainsi, la pile à combustible est inerte lorsqu'elle est transportée dans un aéronef, ce qui permet de sécuriser son transport.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une vue schématique d'une forme de réalisation du système de génération selon l'invention,
- la figure 2 est une vue schématique d'une première forme de réalisation d'un conteneur du système de génération selon l'invention,
- la figure 3 est une vue schématique d'une deuxième forme de réalisation d'un conteneur du système de génération selon l'invention,
- la figure 4 est une vue schématique d'un aéronef en position de stationnement relié à un système de génération selon l'invention, et
- la figure 5 est une vue schématique d'un aéronef en vol dans lequel est monté un système de génération selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

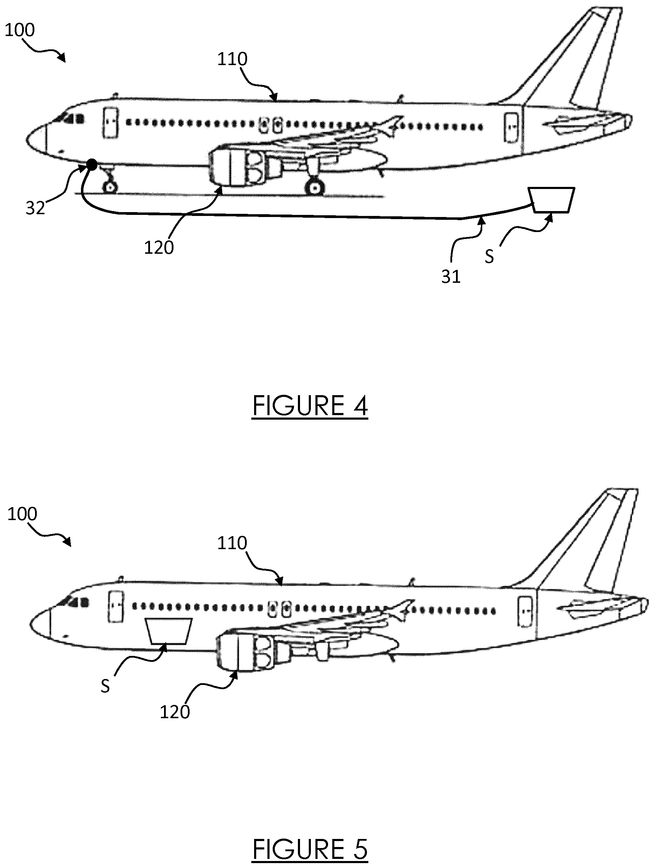

De manière connue, un aéronef 100 est un appareil transportant des passagers et des marchandises d'une destination à une autre par les airs. Un aéronef 100 comprend un fuselage 110 formant le corps de l'aéronef 100 et des turbomoteurs 120 permettant le déplacement de l'aéronef 100 dans les airs comme illustré sur les figures 4 et 5.

Le fuselage 110 s'étend longitudinalement et définit, de manière générale une partie supérieure, appelée habitacle, dans lequel les passagers sont situés, et une partie inférieur, appelée soute, dans laquelle peuvent être placés les bagages des passagers ou des marchandises. De manière connue, l'aéronef 100 comprend un réseau électrique pour alimenter divers dispositifs électriques de l'habitacle (éclairage, etc.). Le réseau électrique de l'aéronef 100 est alimenté en énergie électrique par les turbomoteurs 120 lorsque l'aéronef 100 est en vol.

Pour alimenter le réseau électrique de l'aéronef 100 au sol, l'invention propose d'utiliser un système de génération d'énergie électrique nomade, désigné par la suite système de génération S, qui va maintenant être décrit.

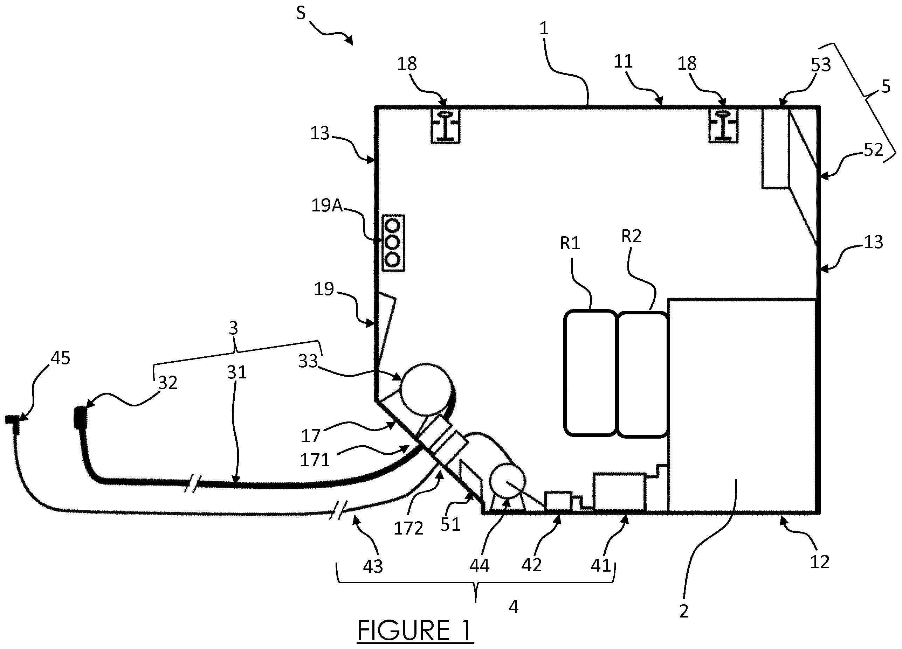

Comme illustré à la figure 1, le système de génération S comprend un conteneur aéronautique 1 dans lequel sont montés les autres éléments du système de génération S, notamment une source de dioxygène R1, une source de dihydrogène R2, une pile à combustible 2 alimentée par les sources R1, R2. Comme cela sera présenté par la suite, le système de génération S comprend également un module de liaison électrique 3 adapté pour relier électriquement la pile à combustible 2 au réseau électrique de l'aéronef 100, un module d'évacuation 4 de l'eau générée par la pile à combustible 2 et un module de refroidissement 5 de la pile à combustible 2.

Les différents éléments du système de génération S vont dorénavant être présentés de manière détaillée.

La source de dioxygène R1 permet de fournir du dioxygène et se présente sous la forme d'un réservoir de dioxygène, d'un compresseur ou autre. Le dioxygène étant un gaz, il est de préférence stocké dans un réservoir sous pression afin de stocker une quantité importante de molécules de dioxygène, dont la formule chimique est notée O₂, dans un volume réduit. Un tel stockage sous pression est également désigné stockage hyperbare. De manière analogue, la source de dihydrogène R2 permet de fournir du dihydrogène et se présente sous la forme d'un réservoir de dihydrogène sous forme gazeuse ou liquide, un reformeur ou autre. Le dihydrogène étant également un gaz, il est de préférence stocké dans un réservoir de dihydrogène R2 sous pression afin de stocker une quantité importante de molécules de dihydrogène, dont la formule chimique est notée H₂, dans un volume réduit. De tels réservoirs sont connus de l'homme du métier et ne seront pas présentés plus en détails.

Dans cet exemple, chaque source R1, R2 se présente sous la forme d'un réservoir monté de manière amovible dans le conteneur aéronautique 1 afin de permettre son remplacement par un autre réservoir plein lorsqu'il est vide. Il va de soi que chaque réservoir R1, R2 pourrait être rempli sans être retiré du conteneur aéronautique 1.

La pile à combustible 2 est alimentée en dioxygène par la source de dioxygène R1 et en dihydrogène par la source de dihydrogène R2 afin de générer de l'énergie électrique à partir d'une combustion électrochimique du dioxygène et du dihydrogène. De manière connue, la pile à combustible 2 comprend une pluralité de cellules pour faire réagir le dioxygène et le dihydrogène afin de générer de l'électricité grâce à une réaction d'oxydoréduction.

De manière connue, chaque cellule comprend une anode et une cathode. Au niveau de l'anode, le dihydrogène se dissocie entre des ions H⁺ et des électrons e- selon une réaction donnée par la formule : 2H₂=4H⁺+4e-. Les électrons génèrent alors un courant électrique. Au niveau de la cathode, des ions H⁺, des électrons e- et du dioxygène O₂ forment de l'eau selon une réaction donnée par la formule : 4H⁺+4e-+0₂=2H₂O.

La pile à combustion 2 permet ainsi de générer de l'énergie électrique à partir de la réaction entre du dioxygène et du dihydrogène. Une telle réaction produit également de l'eau et de la chaleur qui sont évacués respectivement par le module d'évacuation 4 et par le module de refroidissement 5 comme cela sera décrit par la suite.

En référence à la figure 1, le système de génération S comporte un conteneur aéronautique 1 dans lequel sont stockés les autres éléments afin de les protéger. De manière connue, un conteneur aéronautique 1 est adapté pour être transporté dans la soute de stockage de l'aéronef 100, c'est-à-dire, dans la partie inférieure du fuselage.

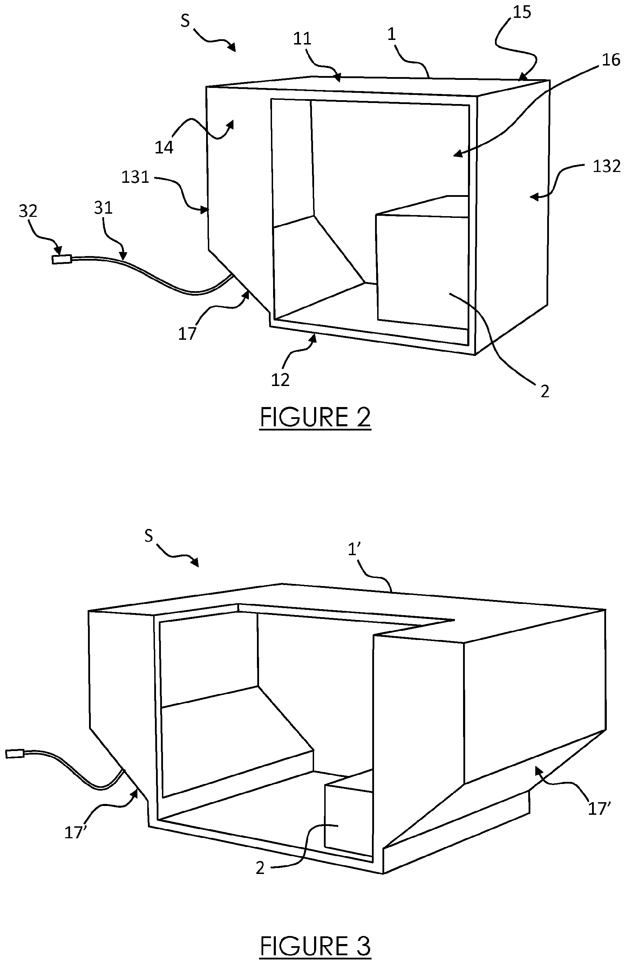

Dans cette première forme de réalisation, en référence à la figure 2, le conteneur aéronautique 1 se présente sous la forme d'une caisse ayant un pan coupé. Le conteneur aéronautique 1 comprend une paroi horizontale supérieure 11, une paroi horizontale inférieure 12, une paroi verticale gauche 131, une paroi verticale droite 132, une paroi verticale avant 14 et une paroi verticale arrière 15. Le conteneur aéronautique 1 définit ainsi un volume intérieur entre les différentes parois, dans lequel sont montés les différents éléments du système de génération S. Le conteneur aéronautique 1 comprend également une ouverture 16 d'accès au volume intérieur qui est fermée par une porte ou un volet.

Afin d'optimiser l'utilisation de l'espace de stockage, le conteneur aéronautique 1 comprend une paroi inférieure inclinée 17 (pan coupé) qui permet de s'adapter à la forme du fuselage 110. En effet, le fuselage 110 possède une section transversale circulaire. Aussi, la soute de stockage située en partie inférieure possède une section en forme de demi-disque. Autrement dit, les parois latérales de la soute de stockage sont incurvées et la longueur horizontale de la section transversale de la soute de stockage est croissante selon la direction verticale. Aussi, un conteneur aéronautique 1 comprenant une paroi inférieure inclinée 17 permet de limiter l'encombrement en partie inférieure pour s'adapter à la forme incurvée de la soute de stockage. Un tel conteneur aéronautique 1 comprenant une paroi inférieure inclinée 17 optimise ainsi le volume disponible par rapport à un conteneur parallélépipédique.

Dans cet exemple, la paroi verticale gauche 131 est plus courte que la paroi verticale droite 132, la paroi inférieure inclinée 17 rejoignant la paroi horizontale inférieure 12 à la paroi verticale gauche 131 comme illustré aux figures 1 et 2. Le conteneur aéronautique 1 possède ainsi une partie inférieure de section plus faible que sa partie supérieure. Le conteneur aéronautique 1 comporte des parois réalisées en métal afin d'être robuste pour résister aux chocs et aux vibrations. En référence à la figure 2, il est représenté un conteneur aéronautique 1 comportant une unique paroi inférieure inclinée 17. Un tel conteneur aéronautique 1 est connu sous ses références LD1, LD2, LD3 telles que définies par l'ATA (Air Transport Association of America).

En référence à la figure 3, il est représenté un conteneur aéronautique 1 ' comportant deux parois inférieures inclinées 17' (deux pans coupés) qui sont latéralement opposées. Par souci de clarté et de concision, la deuxième forme de réalisation du conteneur aéronautique 1 ' n'est pas présentée en détails, seules les différences avec la première forme de réalisation sont présentées. De même, des références numériques analogues sont utilisées.

Un tel conteneur aéronautique 1' permet d'occuper toute la largeur de l'espace de stockage en s'adaptant à la forme du fuselage 110 de chaque côté du conteneur aéronautique 1'. Un tel conteneur aéronautique 1' est connu sous ses références LD6, LD8 telles que définies par l'ATA.

Comme illustré à la figure 1, le conteneur aéronautique 1 comprend également des anneaux de levage 18 montés au niveau de la paroi supérieure 11 et permettant de manipuler le conteneur aéronautique 1 avec des engins de manutention d'un aéroport de manière classique. Les anneaux de levage 18 sont escamotables dans des logements prévus dans la paroi supérieure 11 afin que, en position escamotée, les anneaux de levage 18 ne s'étendent pas en saillie de la paroi supérieure 11, limitant ainsi leur encombrement lorsqu'ils ne sont pas utilisés.

En référence à la figure 1, le conteneur aéronautique 1 comprend également un panneau de contrôle 19 permettant de commander la pile à combustible 2 comme cela sera décrit par la suite ainsi que des voyants 19A permettant d'informer un opérateur de l'état de fonctionnement du système de génération S. Dans l'exemple illustré sur la figure 1, le conteneur aéronautique 1 comprend trois voyants 19A correspondant à trois états du système de génération S: un état actif, un état d'arrêt ou un état de défaut.

En pratique, si l'aéronef 100 présente un défaut, il envoie un message d'erreur au système de génération S qui bascule alors à l'état de défaut. La pile à combustible 2 arrête alors de produire de l'énergie électrique et un voyant lumineux 19A s'allume pour informer que la pile à combustible 2 est à l'état en défaut. De préférence, le panneau de contrôle 19 comprend également un bouton d'arrêt d'urgence pour commander l'arrêt de la pile à combustible 2.

De manière optionnelle, le conteneur aéronautique 1 peut également comprendre des roues (non représentées) montées au niveau de la paroi horizontale inférieure 12 afin de faciliter le déplacement le conteneur aéronautique 1 au sol. De telles roues peuvent être escamotées afin de limiter leur encombrement lorsqu'elles ne sont pas utilisées.

Un tel conteneur aéronautique 1 permet de manière avantageuse de confiner la pile à combustible dans sa cavité intérieure afin de protéger la pile à combustible 2, notamment des chocs et des intempéries, ainsi que l'opérateur en cas de dysfonctionnement de la pile à combustible 2.

En référence à la figure 1, le module de liaison électrique 3 permet de relier électriquement la pile à combustible 2 à l'aéronef 100 afin d'alimenter ce dernier en énergie électrique produite par la pile à combustible 2.

Le module de liaison électrique 3 comprend un câble électrique 31 dont une première extrémité (non représentée) est reliée à la pile à combustible 2 et dont une deuxième extrémité est reliée à un port de connexion électrique de sortie 32 permettant d'interfacer le système de génération S avec l'aéronef 100. Dans cet exemple, le module de liaison électrique 3 comprend également un enrouleur 33 configuré pour enrouler ledit câble électrique 31 à l'intérieur du conteneur aéronautique 1.

Le câble électrique 31 comprend au moins un fil conducteur d'alimentation, par exemple réalisé en un matériau métallique conducteur, afin de conduire l'énergie électrique. Le fil conducteur d'alimentation est relié à un port d'alimentation de la pile à combustible 2.

Selon un aspect de l'invention, le câble électrique 31 comprend également au moins un fil conducteur de communication adapté pour permettre l'échange de données entre la pile à combustible 2 et l'aéronef 100. Le fil conducteur de communication est relié à un port de commande de la pile à combustible 2. De manière préférée, le port de commande de la pile à combustible 2 est relié, d'une part, au panneau de contrôle 19 et, d'autre part, au port de connexion électrique de sortie 32 via le fil conducteur de communication. Cela permet d'allumer et d'éteindre le système de génération S à distance afin de réguler la génération d'énergie électrique par la pile à combustible 2 en fonction des besoins de l'aéronef 100. Ainsi, la pile à combustible 2 produit la quantité nécessaire d'énergie électrique à l'aéronef 100.

Le port de connexion électrique de sortie 32 permet de coopérer avec un port de connexion électrique d'entrée (non représenté) de l'aéronef 100, tel qu'une prise de stationnement. Dans cet exemple, le port de connexion électrique de sortie 32 remplit une première fonction d'alimentation et une deuxième fonction de communication. Comme illustré à la figure 1, le câble électrique 31 est monté de manière coulissante dans une première ouverture 171 formée dans la paroi inférieure inclinée 17.

L'enrouleur 33, de préférence automatique, permet d'enrouler et de dérouler le câble électrique 31 afin de pouvoir aisément ranger le câble électrique 31 à l'intérieur du conteneur aéronautique 1 tout en permettant son extraction aisée pour brancher le port de connexion électrique de sortie 32 à l'aéronef 100. Avantageusement, le conteneur aéronautique 1 comprend une cavité de stockage du port de connexion électrique de sortie 32 lorsque le câble électrique 31 est enroulé. Une telle cavité de stockage permet de protéger le port de connexion électrique de sortie 32 tout en permettant à un opérateur de s'en saisir de manière rapide et aisée afin de dérouler le câble électrique 31 pour le brancher à l'aéronef 100. Une telle cavité de stockage est située sur la paroi inférieure inclinée 17 afin d'être aisément accessible tout en limitant l'encombrement. En position de stockage enroulée, le port de connexion électrique de sortie 32 est protégé par la paroi inférieure inclinée 17 à l'encontre des intempéries et des chocs.

Autrement dit, le module de liaison électrique 3 permet, à la manière d'une rallonge électrique, de connecter la pile à combustible 2 à l'aéronef 100 tout en protégeant la pile à combustible 2. Les opérateurs ne sont pas en contact direct avec la pile à combustible 2, ce qui augmente la sécurité.

Toujours en référence à la figure 1, le module d'évacuation 4 permet de d'évacuer l'eau produite par la pile à combustible 2 hors du conteneur aéronautique 1. Dans cet exemple, le module d'évacuation 4 comprend un réservoir d'eau 41, une pompe électrique 42, un tuyau 43 et un enrouleur 44 dudit tuyau 43.

L'eau produite par la pile à combustible 2 est récupérée et stockée dans le réservoir d'eau 41. La pompe électrique 42 permet de vider le réservoir d'eau 41 en injectant l'eau dans le tuyau 43.

Le tuyau 43 s'étend longitudinalement entre une première extrémité reliée à la pompe électrique 42, et une deuxième extrémité reliée à un port de connexion hydraulique de sortie 45.

Le port de connexion hydraulique de sortie 45 peut être relié à l'aéronef 100 afin d'injecter l'eau dans l'aéronef 100 où elle pourra être réutilisée. Néanmoins, il va de soi que le port de connexion hydraulique de sortie 45 pourrait être connecté à un réservoir externe. Avantageusement, le tuyau 43 est souple afin de pouvoir être enroulé et déroulé. De manière analogue au câble électrique 31, le tuyau 43 est monté de manière coulissante dans une deuxième ouverture 172 formée dans la paroi inférieure inclinée 17.

L'enrouleur 44, de préférence automatique, permet d'enrouler et de dérouler le tuyau 43 afin de pouvoir aisément ranger le tuyau 43 à l'intérieur du conteneur aéronautique 1 tout en permettant son extraction facile pour brancher le port de connexion hydraulique de sortie 45 à l'aéronef 100. Avantageusement, le conteneur aéronautique 1 comprend une cavité de stockage du port de connexion hydraulique de sortie 45 lorsque le tuyau 43 est enroulé. Une telle cavité de stockage permet de protéger le port de connexion hydraulique de sortie 45 tout en permettant à un opérateur de s'en saisir de manière rapide et aisée afin de dérouler le tuyau 43 pour le brancher à l'aéronef 100. Une telle cavité de stockage est située sur la paroi inférieure inclinée 17 afin d'être aisément accessible tout en la protégeant, notamment de l'eau de pluie.

Toujours en référence à la figure 1, le module de refroidissement 5 permet de d'évacuer la chaleur produite par la pile à combustible 2 hors du conteneur aéronautique 1.

Le module de refroidissement 5 comprend une entrée d'air 51, une sortie d'air 52 et un ventilateur d'air 53 permettant de faire circuler de l'air à l'intérieur du conteneur aéronautique 1 entre l'entrée d'air 51 et la sortie d'air 52. Comme illustré à la figure 1, l'entrée d'air 51 est placée dans la partie inférieure du conteneur aéronautique 1 et permet de faire entrer un flux d'air froid tout en permettant l'évacuation éventuelle d'eau stockée dans le fond du conteneur aéronautique 1. De préférence, l'entrée d'air 51 est formée dans la paroi inférieure inclinée 17 afin d'éviter qu'elle ne soit en contact avec le sol, ce qui empêcherait l'air d'entrer.

Toujours en référence à la figure 1, la sortie d'air 52 est placée dans la partie supérieure du conteneur aéronautique 1 afin de permettre une évacuation naturelle de l'air chaud vers le haut du fait de la différence de densité avec l'air froid. Autrement dit, une telle position de l'entrée d'air 51 en bas et de la sortie d'air 52 en haut permet une circulation passive de l'air. La sortie d'air 52 se présente de préférence sous la forme d'une canalisation inclinée vers le bas afin d'éviter que l'eau de pluie ne rentre dans le conteneur aéronautique 1. L'entrée d'air 51 et la sortie d'air 52 sont formées sur des parois opposées du conteneur aéronautique 1 de manière à permettre une ventilation optimale de la cavité intérieure.

Le ventilateur d'air 53 permet d'améliorer la circulation de l'air en augmentant notamment le débit d'air sortant du conteneur aéronautique 1. De préférence, le ventilateur 53 est monté de manière adjacente à la sortie d'air 52 afin d'aspirer l'air intérieur. Le ventilateur 53 permet d'accélérer les échanges thermiques avec la pile à combustible 2 et d'optimiser l'évacuation de la chaleur.

Selon un aspect préféré, le module de refroidissement 5 comprend également un échangeur thermique (non représenté) afin d'améliorer l'échange de chaleur entre l'air et la pile à combustible 2. De préférence encore, un détecteur de dihydrogène est également placé dans le conteneur aéronautique 1 afin de détecter une éventuelle fuite de dihydrogène qui peut être dangereuse du fait de son caractère inflammable. Un tel détecteur de dihydrogène est placé dans la partie supérieure du conteneur aéronautique 1 car, le dihydrogène étant moins dense que l'air, il s'accumule dans la partie supérieure du conteneur aéronautique 1.

Il va maintenant être décrit un exemple d'utilisation du système de génération S.

En référence à la figure 4, lorsque l'aéronef 100 est stationné au niveau d'un aéroport, le système de génération S est positionné à proximité de l'aéronef 100. Pour relier électriquement le système de génération S à l'aéronef 100, un opérateur saisit le port de connexion électrique de sortie 32, le tire jusqu'à l'aéronef 100 en déroulant le câble électrique 31, en s'opposant à l'effort de l'enrouleur 33, puis le branche à l'aéronef 100 pour relier électriquement l'aéronef 100 au système de génération S et les faire communiquer. Dans cette forme de réalisation, l'aéronef 100 peut également commander la génération d'énergie électrique par la pile à combustible 2 via le port de connexion électrique de sortie 32.

Pour relier hydrauliquement l'aéronef 100 au système de génération S. L'opérateur saisit le port de connexion hydraulique de sortie 45, le tire jusqu'à l'aéronef 100 en déroulant le tuyau 43 puis le branche au réseau hydraulique de l'aéronef 100. La connexion électrique et hydraulique du système de génération S est simple à réaliser par un unique opérateur. En outre, les conditions de sécurité sont optimales, l'opérateur n'étant jamais en contact direct avec la pile à combustible 2.

L'opérateur peut commander l'activation de la pile à combustible 2 depuis le panneau de contrôle 19 situé sur le conteneur aéronautique 1. Un voyant lumineux 19A s'allume alors pour informer que la pile à combustible 2 est à l'état de marche. La pile à combustible 2 génère alors de l'énergie électrique pour l'aéronef 100. L'eau générée par la pile à combustible 2 est récupérée et extraite du système de génération S par le tuyau 43. La chaleur générée par la pile à combustible 2 est évacuée du système de génération S via la sortie d'air 52.

De manière préférée, durant le fonctionnement de la pile à combustible 2, l'aéronef 100 envoi des données au système de génération S afin de commander la pile à combustible 2 pour que cette dernière génère la puissance électrique nécessaire. Ceci permet d'adapter la consommation en dihydrogène de la pile à combustible 2 en fonction des besoins de l'aéronef 100 et ainsi de prolonger l'autonomie de la pile à combustible 2. Ceci permet également d'optimiser le dimensionnement du système de génération S afin d'en limiter l'encombrement.

Grâce à l'invention, l'aéronef 100 n'est pas tributaire de l'aéroport pour s'alimenter électriquement. En outre, le système de génération S ne présente pas de nuisance.

De manière avantageuse, lorsque l'aéronef 100 doit se rendre à une nouvelle destination. Le système de génération S peut être chargé dans l'aéronef afin de pouvoir être utilisé à la nouvelle destination. A cet effet, en référence à la figure 5, le système de génération S est positionné dans la soute de stockage de l'aéronef 100 de manière similaire à un conteneur aéronautique classique. Le système de génération S peut être manipulé de manière analogue à un conteneur classique. De manière avantageuse, les ports de connexion 32, 45 sont protégés des chocs latéraux et verticaux lors du transport du fait de leur positionnement sous la surface inférieure inclinée 17.

Le système de génération S est désactivé afin de permettre le transport sécurisé de dihydrogène. Pour ce faire, la pile à combustible 2 est inactivée, autrement dit, elle ne génère plus d'énergie électrique. Un voyant lumineux 19A est allumé pour informer un opérateur que la pile à combustible 2 est à l'état d'arrêt. Ainsi, en vol, le système de génération S en énergie électrique n'interagit pas avec l'aéronef 100, ce qui permet de se dispenser d'une autorisation du constructeur de l'aéronef 100.

Une fois arrivé à la nouvelle destination, le système de génération S est déchargé de l'aéronef 100 puis de nouveau connecté au réseau électrique de l'aéronef 100 afin de l'alimenter électriquement. Le système de génération S selon l'invention permet d'assurer une alimentation électrique de l'aéronef de manière nomade tout en assurant une sécurité élevée.

## Revendications

1. Système de génération (S) d'énergie électrique nomade, notamment pour un aéronef (100), ledit système de génération (S) comprenant :
- au moins une source de dioxygène (R1),
- au moins une source de dihydrogène (R2),
- au moins une pile à combustible (2), reliée à ladite source de dioxygène (R1) et à ladite source de dihydrogène (R2), configurée pour générer de l'énergie électrique à partir du dioxygène et du dihydrogène,
**ledit système de génération (S) étant caractérisé en ce qu'**il comprend un conteneur aéronautique (1, 1') configuré pour être transporté dans un aéronef (100) et dans lequel sont montées ladite source de dioxygène (R1), ladite source de dihydrogène (R2) et ladite pile à combustible (2), le système de génération (S) comportant au moins un module de liaison électrique (3) relié électriquement à la pile à combustible (2), le module de liaison électrique (3) comportant un port de connexion électrique de sortie (32) configuré pour être connecté électriquement à un aéronef (100) afin de l'alimenter en énergie électrique.

2. Système de génération (S) selon la revendication 1, dans lequel le conteneur (1, 1') comprend une partie inférieure dont la longueur est plus faible que sa partie supérieure.

3. Système de génération (S) selon l'une des revendications 1 à 2, dans lequel le conteneur (1, 1') comprend au moins un pan coupé définissant au moins une paroi inférieure inclinée (17, 17'), le module de liaison électrique (3) s'étendant dans une ouverture (171) formée dans ladite paroi inférieure inclinée (17, 17').

4. Système de génération (S) selon l'une des revendications précédentes, dans lequel le conteneur aéronautique (1, 1') est du type LD1, LD2, LD3, LD6 ou LD8 tel que défini par l'ATA (Air Transport Association of America).

5. Système de génération (S) selon l'une des revendications précédentes, dans lequel le module de liaison électrique (3) comprend au moins un câble électrique (31) dont une première extrémité est reliée électriquement à la pile à combustible (2) et dont une deuxième extrémité est reliée au port de connexion électrique de sortie (32).

6. Système de génération (S) selon l'une des revendications précédentes, dans lequel le module de liaison électrique (3) est relié à un port de commande de la pile à combustible (2).

7. Système de génération (S) selon l'une des revendications précédentes, dans lequel le système de génération (S) comprend un module de récupération (4) de l'eau générée par la pile à combustible (2), ledit module de récupération (4) comprenant au moins un port de connexion hydraulique de sortie (45) adapté pour être relié hydrauliquement à l'aéronef (100).

8. Système de génération (S) selon l'une des revendications précédentes, dans lequel le système de génération (S) comprend un module de refroidissement (5) de la pile à combustible (2), ledit module de refroidissement (5) comprenant au moins une entrée d'air (51) et une sortie d'air (52) formées dans le conteneur aéronautique (1).

9. Ensemble d'un aéronef (100) comprenant un réseau électrique et d'au moins un système de génération (S) selon l'une des revendications précédentes, le port de connexion électrique de sortie (32) du système de génération (S) étant relié au réseau électrique de l'aéronef (100).

10. Procédé d'alimentation d'un réseau électrique d'un aéronef au moyen d'un système de génération (S) selon l'une des revendications 1 à 8, le système de génération (S) étant inactivé et chargé dans un espace de stockage de l'aéronef (100), le procédé comprenant :
- une étape de déchargement du système de génération (S) en dehors de l'aéronef (100),
- une étape de connexion électrique du système de génération (S) à l'aéronef (100) et
- une étape d'activation du système de génération (S).

## Patentansprüche

1. Mobiles System zur Erzeugung von Elektrizität (S), insbesondere für ein Flugzeug (100), wobei das Erzeugungssystem (S) umfasst:
- mindestens eine Disauerstoffquelle (R1),
- mindestens eine Diwasserstoffquelle (R2),
- mindestens eine Brennstoffzelle (2), die mit der Disauerstoffquelle (R1) und mit der Diwasserstoffquelle (R2) verbunden ist, die ausgelegt ist, um aus Disauerstoff und Diwasserstoff Elektrizität zu erzeugen,
wobei das Erzeugungssystem (S) **dadurch gekennzeichnet ist, dass** es einen Luftfahrtbehälter (1, 1') umfasst, der ausgelegt ist, um in einem Flugzeug (100) transportiert zu werden und in dem die Disauerstoffquelle (R1), die Diwasserstoffquelle (R2) und die Brennstoffzelle (2) angebracht sind, wobei das Erzeugungssystem (S) mindestens ein elektrisches Verbindungsmodul (3) aufweist, das mit der Brennstoffzelle (2) elektrisch verbunden ist, wobei das elektrische Verbindungsmodul (3) einen elektrischen Ausgangs-Verbindungsport (32) aufweist, der ausgelegt ist, um mit einem Flugzeug (100) elektrisch verbunden zu sein, um es mit Elektrizität zu versorgen.

2. Erzeugungssystem (S) nach Anspruch 1, wobei der Behälter (1, 1') einen unteren Teil umfasst, dessen Länger kürzer als sein oberer Teil ist.

3. Erzeugungssystem (S) nach einem der Ansprüche 1 bis 2, wobei der Behälter (1, Γ) mindestens ein abgeschnittenes Wandstück umfasst, das mindestens eine schräge untere Wand (17, 17') definiert, wobei sich das elektrische Verbindungsmodul (3) in einer Öffnung (171) erstreckt, die in der schrägen unteren Wand (17, 17') ausgebildet ist.

4. Erzeugungssystem (S) nach einem der vorangehenden Ansprüche, wobei der Luftfahrtbehälter (1, 1') vom Typ LD1, LD2, LD3, LD6 oder LD8 ist, so wie von der ATA (Air Transport Association of America) definiert.

5. Erzeugungssystem (S) nach einem der vorangehenden Ansprüche, wobei das elektrische Verbindungsmodul (3) mindestens ein Stromkabel (31) umfasst, von dem ein erstes Ende mit der Brennstoffzelle (2) elektrisch verbunden ist und von dem ein zweites Ende mit dem elektrischen Ausgangs-Verbindungsport (32) verbunden ist.

6. Erzeugungssystem (S) nach einem der vorangehenden Ansprüche, wobei das elektrische Verbindungsmodul (3) mit einem Steuerport der Brennstoffzelle (2) verbunden ist.

7. Erzeugungssystem (S) nach einem der vorangehenden Ansprüche, wobei das Erzeugungssystem (S) ein Rückgewinnungsmodul (4) des von der Brennstoffzelle (2) erzeugten Wassers umfasst, wobei das Rückgewinnungsmodul (4) mindestens einen hydraulischen Ausgangs-Verbindungsport (45) umfasst, der zur hydraulischen Verbindung mit dem Flugzeug (100) geeignet ist.

8. Erzeugungssystem (S) nach einem der vorangehenden Ansprüche, wobei das Erzeugungssystem (S) ein Kühlmodul (5) der Brennstoffzelle (2) umfasst, wobei das Kühlmodul (5) mindestens einen Lufteinlass (51) und einen Luftauslass (52) umfasst, die in dem Luftfahrtbehälter (1) ausgebildet sind.

9. Einheit aus einem Flugzeug (100), umfassend ein Stromnetz, und mindestens einem Erzeugungssystem (S) nach einem der vorangehenden Ansprüche, wobei der elektrische Ausgangs-Verbindungsport (32) des Erzeugungssystems (S) mit dem Stromnetz des Flugzeugs (100) verbunden ist.

10. Verfahren zur Versorgung eines Stromnetzes eines Flugzeugs mittels eines Erzeugungssystems (S) nach einem der Ansprüche 1 bis 8, wobei das Erzeugungssystem (S) inaktiviert und in einem Lagerraum des Flugzeugs (100) geladen wird, wobei das Verfahren umfasst:
- einen Entladungsschritt des Erzeugungssystems (S) außerhalb des Flugzeugs (100),
- einen Schritt des elektrischen Verbindens des Erzeugungssystems (S) mit dem Flugzeug (100) und
- einen Aktivierungsschritt des Erzeugungssystems (S).

## Claims

1. A mobile electric power generation system (S), especially for an aircraft (100), said generation system (S) comprising:
- at least one dioxygen source (R1),
- at least one dihydrogen source (R2),
- at least one fuel cell (2), connected to said dioxygen source (R1) and to said dihydrogen source (R2), configured to generate electric power from dioxygen and dihydrogen,
said generation system (S) being **characterised in that** it comprises an aeronautical container (1, 1') configured to be transported in an aircraft (100) and in which said dioxygen source (R1), said dihydrogen source (R2) and said fuel cell (2) are mounted, the generation system (S) comprising at least one electric connection module (3) electrically connected to the fuel cell (2), the electric connection module (3) comprising an output electric connection port (32) configured to be electrically connected to an aircraft (100) to supply it with electric power.

2. The generation system (S) according to claim 1, wherein the container (1, 1') comprises a lower part the length of which is smaller than its upper part.

3. The generation system (S) according to one of claims 1 to 2, wherein the container (1, 1') comprises at least one cut-off wall section defining at least one tilted lower wall (17, 17'), the electric connection module (3) extending into an opening (171) formed into said tilted lower wall (17, 17').

4. The generation system (S) according to one of the previous claims, wherein the aeronautical container (1, 1') is of the LD1, LD2, LD3, LD6 or LD8 type such as defined by ATA (Air Transport Association of America).

5. The generation system (S) according to one of the previous claims, wherein the electric connection module (3) comprises at least one electric cable (31) a first end of which is electrically connected to the fuel cell (2) and a second end of which is connected to the output electric connection port (32).

6. The generation system (S) according to one of the previous claims, wherein the electric connection module (3) is connected to a control port of the fuel cell (2).

7. The generation system (S) according to one of the previous claims, wherein the generation system (S) comprises a module (4) for recovering water generated by the fuel cell (2), said recovery module (4) comprising at least one output hydraulic connection port (45) adapted to be hydraulically connected to the aircraft (100).

8. The generation system (S) according to one of the previous claims, wherein the generation system (S) comprises a module (5) for cooling the fuel cell (2), said cooling module (5) comprising at least an air inlet (51) and an air outlet (52) formed in the aeronautical container (1).

9. An assembly of an aircraft (100) comprising an electric network and of at least one generation system (S) according to one of the previous claims, the output electric connection port (32) of the generation system (S) being connected to the electric network of the aircraft (100).

10. A method for supplying an electric network of an aircraft by means of a generation system (S) according to one of claims 1 to 8, the generation system (S) being inactivated and charged in a storage space of the aircraft (100), the method comprising:
- a step of discharging the generation system (S) outside the aircraft (100),
- a step of electrically connecting the generation system (S) to the aircraft (100) and
- a step of activating the generation system (S).
